# EUROPEAN PATENT SPECIFICATION

(11) **EP 3 542 590 B1**
(45) Date of publication and mention of the grant of the patent: **03.01.2024**
(21) Application number: 16806389.9
(22) Date of filing: 17.11.2016
(51) Int. Cl.: H04W 36/00, H04W 76/15, H04W 76/19, H04L 5/00

(54) **MULTI-CONNECTIVITY CONTROL PLANE ANCHOR**
ANKER EINER STEUEREBENE MIT MULTIKONNEKTIVITÄT
ANCRAGE DE PLAN DE COMMANDE À CONNECTIVITÉ MULTIPLE

(43) Date of publication of application: 25.09.2019
(73) Proprietor: Nokia Technologies Oy, 02610 Espoo (FI)
(72) Inventor: FORSSELL, Mika, 06750 Tolkkinen (FI)
(74) Representative: Page White Farrer
(86) International application number: PCT/US2016/062532
(87) International publication number: WO 2018/093367

(56) References cited:
- EP-A1- 2 884 688
- EP-A1- 2 947 911
- WO-A2-2014/021765
- US-A1- 2015 181 479

## Description

### BACKGROUND:

### Field:

Various communication systems may benefit from increased reliability. For example, communication systems may benefit from robust multi-connectivity that ensures ultra-reliable connections between a user equipment and a core network.

### Description of the Related Art:

In 3rd Generation Partnership Project (3GPP) Long Term Evolution (LTE) networks, a user equipment attaches to a master base station, known as a master evolved NodeB (MeNB). The MeNB manages control plane, mobility, and data transmissions for the user equipment. In particular, MeNB is used to facilitate user equipment handover. When the MeNB determines that a neighboring cell becomes a better option than a currently used cell served by the MeNB, the MeNB can initiate a handover to a new MeNB. In addition, MeNBs may also be used to manage operations between different radio access technologies (RATs). For example, a user equipment may be handed over from an LTE MeNB to a 3^{rd} generation (3G) technology MeNB.

3GPP technology has also provided for carrier aggregation and dual connectivity operations. This dual connectivity can allow for data transmissions from the user equipment to both at least one secondary eNB (SeNB) and the MeNB. The SeNB can be controlled by the MeNB, and is used by the network to increase the available bandwidth for user equipment transmissions. Control plane and mobility operations are manage by the MeNB in the mobile network, while the SeNB can utilize for user plane data transmission. MeNB can control dual connectivity operations at the SeNB, and may request that the SeNB allocate radio resources. The specific radio resources allocated by the SeNB, however, may be determined by the SeNB itself.

LTE can operate in a heterogeneous network (HetNet) environment. For example, LTE unlicensed, LTE or wireless local access network (WLAN) aggregation, LTE macro, and/or LTE small cells may all be included in a HetNet 5^{th} generation (5G) is a new generation radio technology that merges different RATs for harnessing surrounding capacity and coverage. 5G utilizes multi-connectivity operations in which the UE can be connected at the same time to multiple services via one or more RATs.
WO2014/021765A2 discloses a wireless terminal and base station, for providing a handover for a subset of bearers associated with the wireless terminal. The subset of bearers is less than a total number of bearers associated with the wireless terminal. Thus, upon the completion of the handover procedure, at least one bearer will stay connected with a source base station.
US2015/181479A1 discloses that, in a wireless network, a user equipment (UE) establishes a radio resource control connection with a base station, which is UE anchor. The UE applies carrier aggregation for multiple component carriers configured as multiple serving cells. The aggregated serving cells are served by the anchor eNB and other drift eNB(s). The UE performs RLM/RLF over PCELL and SCELL belonging to corresponding cell groups. When RLF happens in a serving cell, the UE and the eNB apply certain actions over the serving cell or all serving cells in the group. RLF procedures in anchor eNB and in drift eNB are proposed. Both UE side and network side behaviours are included.

### SUMMARY:

The invention is defined by the independent claims. Preferred embodiments are set out in the dependent claims.

### BRIEF DESCRIPTION OF THE DRAWINGS:

For proper understanding of the invention, reference should be made to the accompanying drawings, wherein:
Figure 1 illustrates a flow diagram according to certain embodiments.
Figure 2 illustrates a system
Figure 3 illustrates a system diagram
Figure 4 illustrates a flow diagram
Figure 5 illustrates a system

### DETAILED DESCRIPTION:

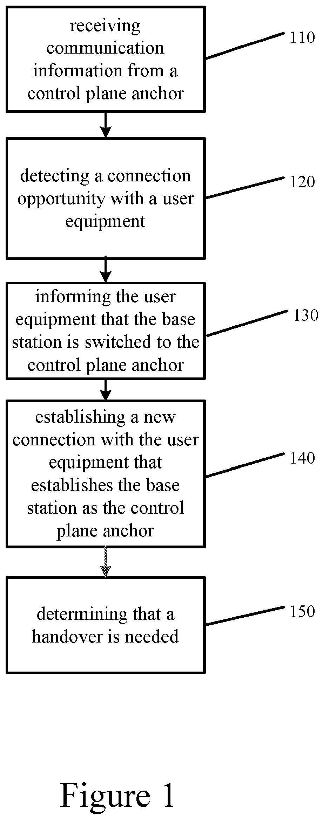

The invention is described in the following with reference to figure 1 and the related description paragraphs. All other figures and related description paragraphs pertain to non-claimed embodiments and are presented for a better understanding of the invention.

The establishment of ultra-reliable low latency communications (URLLC) in 5G networks may be used to ensure proper quality of experience for users in the network. For example, a user, such as a doctor, may perform remote surgery using a 5G network connection with high bandwidth, and extremely low latencies that can be used to command surgery tools, as well as receive feedback. Remote control of other machines may also be facilitated by a 5G network. Radio link failures, however, or any other communication failure, may prevent the network from achieving URLLC used to enhance the quality of experience of network users.

When a radio link failure occurs, the UE may scan for a radio interface, and may attach itself to the new available system or cell, assuming overlapping cell coverage from the earlier used system, such as 5G or LTE. For example, after a radio link failure occurs the UE may attach to the new RAT. Attaching to the new RAT, however, may require network synchronization and/or reading system information. The time needed for scanning and attaching to the new RAT, however, may lead to a lower quality of experience. In another example, the network element along a transmission path may become unavailable. The user equipment may detect a working radio connection with a radio access network (RAN), yet data fails to reach the recipient. The time needed to identify the defective network element may lead to a lower quality of experience for the user.

Certain embodiments may help to facilitate URLLC by allowing for a quick assignment of a new control plane anchor for the user equipment (UE). In multi-connectivity embodiments, control plane redundancy and connectivity robustness may be introduced by allowing two or more base stations to participate in control plane operations. The two or more base stations may either utilize the same RAT or different RAT. RAT, for example, may be LTE, LTE-Advanced, 5G, WLAN, or any 5G successors, such as 6^{th} generation (6G), as well as a macro cell, small cells, and/or base stations operating on same or different frequencies. In other words, two or more base stations or radio units may operate on either the same or different frequency or channel, using the same or different RAT. For example, in LTE macro and small cell base stations may use the same or different frequency. In an embodiment in which the same frequency is used, interference avoidance mechanisms may also be used. Control plane operations, for example, may include radio resource use by the UE or mobility/handover of the UE.

In some embodiments, a radio link failure may occur between the UE and a base station, or a hardware failure may take place in the base station itself. When such failures occur, the UE may continue operating without interruption by moving communication from the failed base station to a different base station that may already have been activated to serve the UE or have an active communication path with the UE. In other words, the UE may be able to maintain an active control plane connection to a base station, such as a 5G base station (5G BTS), even when the primary base station or the 5G macro in charge of control plane operations has experienced a connection failure with the UE.

The UE, in certain embodiments, may operate in a heterogeneous environment that may include at least one of a macro cell, small cells, licensed band, unlicensed band, mobile device, WLAN, 3G, 4G, 5G, 6G, indoor infrastructure, outdoor infrastructure and/or fixed line technologies, for example, optics, Digital Subscriber Line technologies (xDSL), and/or fixed line fiber optics. In some embodiments, 5G, fixed line, and fixed mobile convergence on the network side may allow for routing of traffic to or from the UE. The UE may be connected to two or more base stations and/or controllers at the same time to transmit and/or receive data, and to efficiently leverage surrounding network resources.

In certain embodiments, the base station may include a controller, such as a processor, for controlling the operation of the base stations. In other embodiments, the controller may be a central controller. The controllers may be a 3G radio network controller (RNC), WLAN controller (WLC), or a radio cloud or physical node coordinating use of base stations implementing one or multiple RATs, for example LTE, 5G, and WLAN, as well as an unlicensed spectrum. An unlicensed 5G base station may use a 5 gigahertz (GHz) or a 60 GHz unlicensed spectrum. In one example, a radio cloud including 5G higher layers may coordinate the use of multiple 5G base stations, which may be 5G macro and/or 5G small cells. For example, the UE may be connected to 5G macro, and the 5G macro may decide to activate at least one 5G small cell and WLAN radio connections with the UE. The at least one 5G small cell and the WLAN can be leveraged by the 5G macro to transmit data to the UE and/or receive data from the UE, and create redundancy in the network.

Figure 1 illustrates a flow diagram according to certain embodiments. In particular, Figure 1 illustrates a flow diagram of a base station, such as a SeNB. In step 110, a base station receives communication information from another base station for high availability / redundancy purposes. The another base station, for example a 5G macro, is the control plane anchor of the UE. In other words, the another base station handles UE control plane operations, such as mobility operations for the UE, and decide when to activate SeNB. SeNB may be 5G small cells, any other overlapping 5G macro that may be utilized along with Carrier Aggregation, for example, and/or WLAN connections for the UE.

The connection information may include any information used by the another base station to communicate with the core network and with the UE. The connection information any also include any other radio information used to connect the UE and the radio access to the core network. For example, connection information may include tunnel end point identifiers, which may be similar to general packet radio service (GPRS) tunneling protocol (GTP) tunnel endpoint identifier (TEID) and IP address information in LTE, quality of service levels, encryption, and/or radio identifiers used by RAN to address the UE, such as a Global Unique Temporary Identity (GUTI) in LTE. The user equipment is connected to the another base station via a control plane connection and to the base station via at least a user plane connection. The another base station, such as a mBTS, may also communicate with the UE for data transmission via a user plane connection. In other words, the mBTS may have at least a control plane connection to the UE, meaning that the mBTS may have both a control plane connection and a user plane connection to the UE, in certain embodiments. A control plane connection may be used to transmit control information, while a user plane may be used to send user data. Control information, for example, may include a channel assignment or a handover command.

In an alternative embodiment, the two or more base stations may utilize a shared data layer. A shared data layer may be a common database accessible to relevant network elements and functions for storing and sharing subscriber, session, and/or operation and management information across relevant network elements and functions. In such an embodiment, instead of receiving UE connection information from another base station, there may be a common storage or database in the network that both the another base station and the base station may use to maintain or gather connection information related to a UE. The base station may therefore, in some embodiments, access the connection information from the common storage or database.

The connection between the UE and the another base station may become unavailable. For example, the radio link between the UE or the another base station may fail, or a hardware failure may have occurred at the another base station or at the transport connection equipment, such as a router, switch, or physical line in the communication path. After step 110, in step 120, the base station, such as a SeNB, detects a connection opportunity with a user equipment that is connected to the another base station, when the another base station is unavailable. The SeNB may view the unavailability of the connection between the UE and the another base station as a connection opportunity with the UE, and initiate the establishment of connection to the UE as a control plane anchor. A control plane anchor may be a network element that may allocate secondary base stations for a user equipment, and may make handover commands to the UE. In other words, the control plane anchor may coordinate UE operations in the network.

In response to the detecting in step 120, in step step 130, the base station informs the user equipment that the base station has been switched to serve as the control plane anchor. The base station uses the communication information received from the another base station to establish a new connection with the UE, as shown in step 140. The new connection will act to inform the UE that the base station is switched to the control plane anchor.

Establishing the new connection may involve sending the UE radio resource reconfiguration information that informs the UE that the base station is the control plane anchor. In some embodiments, the UE may only accept the radio resource reconfiguration when certain conditions are met. For example, the UE may accept the radio resource reconfiguration when the connection with the another base station has been paused for a pre-defined amount of time or a radio link failure has been detected. Once the base station assumes the role of the control plane anchor, the base station may perform control plane operations. Control plane operations, for example, may include determining that a handover is needed, at which point the base station may send a handover command to the UE, as shown in step 150.

In certain embodiments, the base station or SeNB may detect by itself the connection failure between another base station or the MeNB and the user equipment. The SeNB may send a message to the MeNB. If the SeNB does not receive an acknowledgment or a response from the MeNB within a pre-defined time period, the SeNB may assume that a software or hardware failure has occurred at the MeNB, and that the connection between the MeNB and the UE has failed or even severed. In other embodiments, the SeNB may receive a notification from the UE that the connection between the UE and the MeNB has failed. The notification may be a control message sent during a permitted data transmission to indicate the unavailability of the MeNB. In another embodiment, the notification may be in the form of a packet data unit (PDU) header that can include a new field, for example "new primary base station needed = 1." The base station may also, in some embodiments, determine failure in another base station in case transport connection failure occurs, such as an Ethernet failure, which can be detected quickly. The base station may detect mBTS failure also from communication related to a different UE. For example a different UE reports communication failure related to the mBTS may trigger the sBTS to claim control plane anchor to the UE.

Steps 110, 120, and 130 in Figure 1, provide for keep-alive or health operations that allow a base station communicating with a UE to identify communication failure along the full communication path, and take over ownership of the UE. In some embodiments the base station may be a 5G small cell or another 5G macro or small cell, in which dual connectivity or carrier aggregation may be used to deliver data to or from the UE using two or more BTSs. In other embodiments, the base station may be a WLAN access point or, for example, a base station in a standalone LTE or 5G network using only unlicensed spectrum. Taking over ownership of a UE may mean that the base station identifies that another base station is experiencing a connection failure with the UE, and transmits to the UE an RRC bearer reconfiguration message, or any other similar message.

Optionally, the UE may inform the base station of communication problems or radio link failure with the another base station. The RRC reconfiguration message informs the UE that the at least one base station, such as at least one 5G small or macro cell, may now be switched to the control plane anchor for the UE. In another embodiment, after detecting failure in another base station, the UE may select one of the remaining base stations and request that the base station become the control plane anchor by sending a message to the base station.

In certain embodiments, the radio resource configuration message notifying or informing the UE of the new control plane owner or anchor may be accepted by the UE only when the message is received via an already assigned radio resources, such as the assigned resourced used by the base station for data transmission. In another embodiment, the UE may accept the radio resource configuration message when the message includes a field specific to the another base station acting earlier as control plane anchor. Such a field, for example, may be a cell identity or any other identity of the another base station, or a value allocated by the another base station that has already been communicated to the UE at an earlier point in time. The value, for example, may be a UE temporary identity or a message encryption key used by the another base station.

The above embodiments may be used as added security features that may help prevent a third party from making a hostile takeover of the UE. In yet another embodiment, when the UE establishes connection with the another base station, for example a 5G macro. The 5G macro can provide a candidate list (1-N) to the UE, N being the number of base stations, such as 5G small cells, which may act as control plane anchors for the UE and send handover commands to the UE. The candidate list may include for example identifiers or other unique information of the candidate base stations, such as cell identification or media access control (MAC) address, that may allow a UE to identify the candidate base stations. How the assigned 5G macro and the serving small cells utilize control plane anchor authority may be internally coordinated between the base stations listed in the list of candidate control plane anchors. The list of allowed candidate control plane anchor base stations may ensure that base stations or access points without proper authorization may not able to direct the UE.

In some embodiments, the SeNB may not abandon the operations assigned to it by the MeNB. For example, if the MeNB recruited the SeNB to help transmit data for the UE, the SeNB may continue to transmit data, as well as undertake additional control operations as the control plane anchor.

The smooth or seamless transition between the base station and the another base station, as described in the above embodiments, may allow the network to identify the best option for how to handle the failed connection to the UE. For example, the base station may use the communication information to determine whether to initiate handover of the UE to a neighboring base station, such as a 5G macro cell. The neighboring 5G macro cell, for example, may provide for wider coverage than the SeNB serving at the control plane anchor, and as such provide a higher quality of experience to the user of the UE. The neighboring base station may also hand over the UE to an LTE-Advanced Pro base station or WLAN access point.

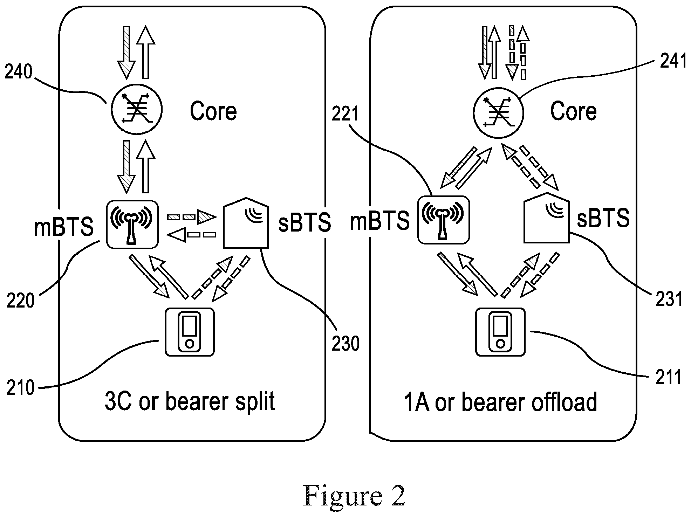

Figure 2 illustrates a system according to certain embodiments. In particular, Figure 2 illustrates two different dual connectivity architectures. A 1A architecture having a small cell connected to a core network via S1, bearer split option, and a 3C architecture having a small cell connected to macro eNodeB via an Xn-interface. The dashed lines in Figure 2 may indicate a user plane connection, while solid lines may indicate a control plane connection. In certain embodiments, a core network 240 may communicate with one RAN endpoint 220, such as a base station that may act as the primary base station (mBTS) or a controller, such as a radio cloud or a network element coordinating LTE or 5G base stations. Primary base station 220 or the controller, which may be located within a base station, may be the control plane anchor, and as such may facilitate communication between UE 210 and core network 240. For example, in a cloud radio setup, a central cloud radio may be used to interface the core network and to distribute traffic across the primary or secondary base stations.

Base station 220 may decide to activate a secondary radio connection or base station 230, such as a SeNB, 5G small cells (sBTS), LTE macro or small cells, 5G macro base station, or a WLAN access point. The activation of the secondary base station 230 may allow for flexible transmission of data from UE 210 using base station 220 and/or secondary base station 230. In some embodiments, base station 220 may allow the UE to transmit data through both base station 220 and secondary base station 230 simultaneously, based on the data load of the network and/or radio frequency information. The radio frequency key performance indicators (KPIs) or network information used by base station 220 may include an interference level, signal strength, available coding scheme, expected delay, load on network elements, or any other radio frequency information that may be used.

Unlike core network 240, core network 241 may have communication channels with one or more RAN endpoints, such as base station 221 and secondary base station 231. For example, UE 211 may be attached to base station 221 by default. To boost data transmission, secondary base station 231 may also be used to help transmit data to and from UE 211. In other words, selected bearers may be directed to secondary base station 231, such as 5G small cells. For example, when Dual Connectivity 1A architecture is used, the core may send data related to a first bearer to the 5G macro and data related to second bearer to 5G small cells. If the core detects that the first bearer is no longer operational, it may redirect traffic from the first bearer to 5G small cells. However, the core may not become a control plane anchor, as the anchor may be handled by RAN internally. The core may therefore notify a second bearer of endpoint communication problems related to the first bearer. The notification may allow, the base station, for example a 5G small cell, to trigger control plane anchor changes more quickly. In dual connectivity 3C architecture, the core may send all user data to single RAN end point, at which point the RAN distributes the traffic over one or more base stations.

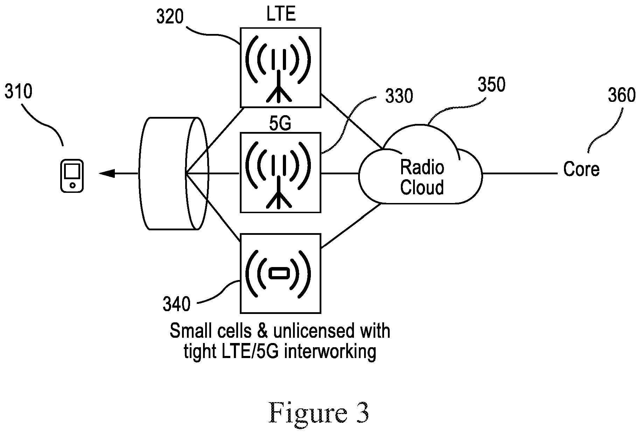

Figure 3 illustrates a system according to certain embodiments. In particular, Figure 3 illustrates an evolutionary multi-connectivity architecture using 3C dual connectivity. Because 3C dual connectivity allows for flexible and dynamic online selection of a transmission path to a UE, certain embodiments may utilize 3C dual connectivity rather than 1A dual connectivity. The embodiment illustrated in Figure 3, for example, allows RAN elements, such as a radio cloud or a central physical unit 350, to send and/or receive data to and from the UE using one or more additional radio units. Radio cloud or central physical unit 350 may be a common database that is shared among multiple radio units. The common database may be used to provide access to communication information. The communication information may be used by a base station to become the control plane anchor. In other words, network information may be used by the another base station to connect the UE to the core network. In an embodiments, in which a radio cloud or a central physical unit may be utilized, the base station becoming control plane anchor may not cause any changes towards the core network as the central unit or radio cloud interfaces the core network and continues serving the UE.

For example, Figure 3 illustrates that UE 310 may communicate with core 360 through another base station, such as a mBTS 330. mBTS 330 may then utilize additional sBTS, such as LTE base station 320 and/or 5G small cell 340to help increase data transmissions to and from core 360 and UE 310. The additional RAN elements may be used to increase peak data rates, improve communication robustness, and/or leverage available radio resources optimally.

The systems shown in Figures 1 and 2 include an mBTS, sBTS, and/or central units that may share control plane information between two or more base stations and/or controllers. This may allow for two or more base stations and/or controllers to have access to communication information in order to take over control plane operations for the UE.

As described in step 110 in Figure 1, 3C dual connectivity mBTS 220 illustrated in Figure 2 may share communication information with sBTS 230, such as identifiers that may be used to communicate with core network 240. mBTS 220 may also share other communication information in the form of radio information, such as quality of service (QoS), radio message encryption related details like keys, assigned radio resource information, such as a frequency channel, and/or other identifiers with the sBTS 230. For example, QoS or QoS characteristics may include one or more of a bit rate, delay or transmission reliability, in which an acknowledged or unacknowledged transmission mode may be used. QoS characteristics may also include ultra-reliable communication characteristics, for example a zero tolerance for interruption (<1 milliseconds (ms) or less than a few ms), or some tolerance, for example a 5 to 10 ms interruption may be accepted. The radio information additional may be considered by the sBTS in deciding how critical redundancy and multi-connectivity may be for the UE once the sBTS becomes the control plane anchor. The communication information may allow sBTS 230 to continue communication with UE 210 in case the connection between mBTS 220 and UE 210 fails. In some embodiments, the communication information can be shared with sBTS 230 during setup of a connection between the sBTS 230 and UE 210 radio communication by mBTS 220. The communication information may also be exchanged at any other time during information changes via message exchange.

In some embodiments, when mBTS 220 became unavailable or when the connection between mBTS 220 and UE 210 fails, sBTS 230 may start using the communication information towards core network 240. The communication information, for example, may include GTP TEID and/or IP address information, such as an IP address or a user diagram protocol (UDP) port for the core element. sBTS 230 may also reconfigure radio bearers that the UE uses in order to inform the UE that sBTS has been switched a control point anchor.

In addition to certain embodiment having a single control plane anchor, such as an MeNB, an alternative hybrid embodiment may be used. In such an alternative embodiment, a UE may have both a user plane connection and a control plane connection with one or more base stations or all base stations participating in a communication. For example, a 5G macro and a UE may have both a control plane and a user plane relationship. In addition, 5G small cells or WLAN may also have a control plane and a user plane relationship with the UE. The 5G small cells, for example, may have freedom to configure radio bearer characteristics for the UE. The UE may be a multi-RAT UE, and may be allocated an assigned spectrum.

Certain embodiments may coordinate UE mobility and avoid having conflicting handover commands towards the UE. For example, even when the UE has control and user plane connections to multiple base stations, a single base station may be assigned as a control plane anchor. When the assigned single base station sends a handover command to the UE, the UE may take appropriate action. No other base station, other than the assigned control plane anchor, may send handover commands to the UE, unless the base station becomes the control plant anchor before sending the handover command, as shown in step 130 of Figure 1. In some embodiments, mBTS and sBTS may coordinate during mobility events, and during other changes in radio allocation. For example, the base station having a first communication with the UE automatically becomes the control plane anchor for the UE, or the base station may claim control plane anchorship using a separate message or information field of a message communicated with UE. For example, when a UE transitions from idle to connected mode in a cell in order to make a telephone call or data transmission after being inactive, the base station serving the cell becomes the anchor.

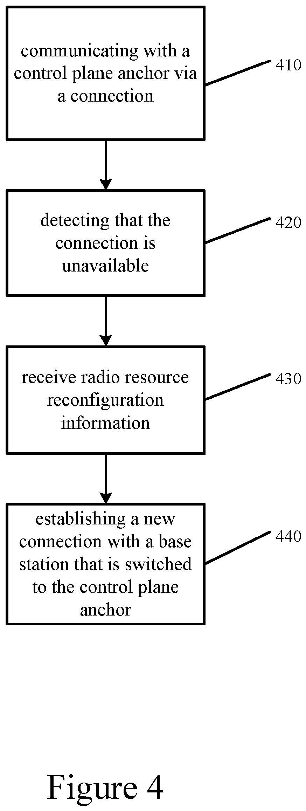

Figure 4 illustrates a flow diagram according to certain embodiments. In particular, Figure 4 illustrates a UE, such as a 5G UE, having dual connectivity. In step 410, the UE may communicate with another base station, such as an mBTS. The mBTS may recruit an sBTS to help with the sending and/or transmiting data from the UE. The UE may therefore be connected to both the mBTS and the sBTS. In some embodiments, the mBTS and the sBTS may have utilize the same RAT or different RAT. A different RAT may mean different frequency and/or technology, such as LTE, 5G, or WLAN. For example, the mBTS may be on a first frequency, and the sBTS may be on a first or a second frequency. In some embodiments, the user equipment is connected to the another base station via a control plane connection when the another base station acts as a control plane anchor and to a base station via at least a user plane connection.

The another base station, such as a mBTS, can also communicate with the UE for data transmission via a user plane connection. In other words, the mBTS may have at least a control plane connection to the UE, but may also have a user plane connection to the UE. In some embodiments, the mBTS may use the sBTS as a data pump for data transmission, while the mBTS handles control plane information. When the sBTS becomes unavailable or loaded, for example, the mBTS may start transmitting user data.

In step 420, the UE may detect that the connection between the UE and the mBTS is unavailable. The unavailability may be caused by radio link failure and/or a hardware failure at the mBTS or an intermediate network entity located between the UE and the mBTS, such as a remote radio head. In some embodiments, the UE may receive a notification from the sBTS that the connection between the UE and the mBTS has failed. In other embodiments, the UE may send a notification and inform the sBTS of the unavailability of the connection between the UE and the mBTS.

In step 430, the UE may receive radio resource reconfiguration information from the sBTS. The radio resource reconfiguration information may inform the UE that an sBTS has now switched to the control plane anchor. For example, a separate message can be used to inform the UE, such as an RRC Reconfiguration message, or a new information element can be added to the existing data message exchanged between the sBTS and the UE. The UE may then optionally establish a new connection with the base station that has now been switched to the control plane anchor, as shown in step 440. The UE may in some embodiments also discontinue all communication with the mBTS, and only communicate with the new control plane anchor base station and any other available sBTSs. In some embodiments, once the control plane anchor connection with the base station is established, the UE may receive a handover command from the base station. The UE may then be handed over from the sBTS to a neighboring base station, such as a 5G macro or LTE-A Pro base station. In other embodiments, a new connection may merely be that the base station informs a UE that it is now the control plane anchor using an existing data transmission connection between the base station and the UE. The already existing data transmission connection may then be used as a control plane connection, which may be termed a new connection.

In some embodiments, the sBTS acting as a control plane anchor may receive an acknowledgment from a neighboring base station once handover of the UE has been initiated. Handover may be triggered by the sBTS if at least one network condition is met. The network condition, for example, may be that a pre-determined signal strength is met.

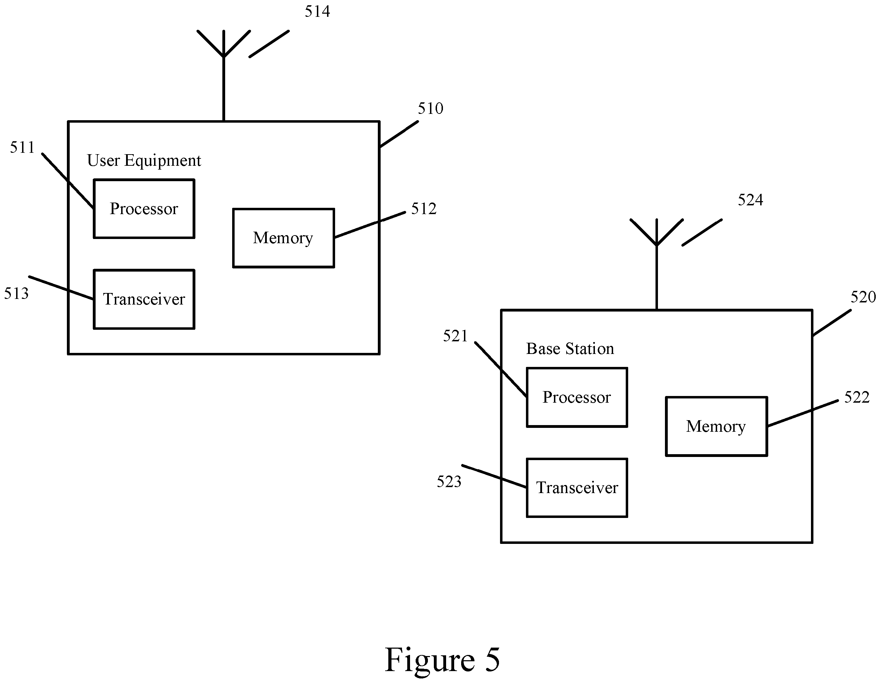

Figure 5 illustrates a system according to certain embodiments. It should be understood that each signal or block in Figures 1, 2, 3, and 4 may be implemented by various means or their combinations, such as hardware, software, firmware, one or more processors and/or circuitry. In one embodiment, a system may include several devices, such as, for example, base station 520 or UE 510. The system may include more than one UE 510 and more one base station 520, although only one access node shown for the purposes of illustration. The base station may also be a network node, access node, an eNB, a 5G BTS, a 5G macro, a 5G small cell, a WLAN access point, a small cell access point, server, host, or any of the other access or network node discussed herein.

Each of these devices may include at least one processor or control unit or module, respectively indicated as 511 and 521. At least one memory may be provided in each device, and indicated as 512 and 522, respectively. The memory may include computer program instructions or computer code contained therein. One or more transceiver 513 and 523 may be provided, and each device may also include an antenna, respectively illustrated as 514 and 524. Although only one antenna each is shown, many antennas and multiple antenna elements may be provided to each of the devices. Other configurations of these devices, for example, may be provided. For example, network entity 520 and UE 510 may be additionally configured for wired communication, in addition to wireless communication, and in such a case antennas 514 and 524 may illustrate any form of communication hardware, without being limited to merely an antenna.

Transceivers 513 and 523 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

A user device or user equipment 510 may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities, a modem or any combinations thereof. In other embodiments, the user equipment may be replaced with a machine communication device that does not require any human interaction, such as a sensor, meter, or robot.

In some embodiments, an apparatus, such as a network entity, may include means for carrying out embodiments described above in relation to Figures 1, 2, 3, and 4. In certain embodiments, at least one memory including computer program code can be configured to, with the at least one processor, cause the apparatus at least to perform any of the processes described herein.

According to certain embodiments, an apparatus 510 may include at least one memory 512 including computer program code, and at least one processor 511. The at least one memory 512 and the computer program code may be configured, with the at least one processor 511, to cause the apparatus 510 at least to communicate at a user equipment with another base station via at least a control plane connection. The another base station is a control plane anchor. The user equipment is connected to a base station via at least a user plane connection. The at least one memory 512 and the computer program code may also be configured, with the at least one processor 511, to also cause the apparatus 510 at least to detect that the connection between the user equipment and the another base station is unavailable. In addition, the at least one memory 512 and the computer program code may be configured, with the at least one processor 511, to cause the apparatus 510 at least to establish a new connection between the user equipment and a base station when the connection between the user equipment and the another base station becomes unavailable. The new connection establishes that the base station is switched to the control plane anchor.

According to certain embodiments, an apparatus 520 may include at least one memory 522 including computer program code, and at least one processor 521. The at least one memory 522 and the computer program code may be configured, with the at least one processor 521, to cause the apparatus 520 at least to detecting at a base station a connection opportunity with a user equipment that is connected to another base station. The another base station is a control anchor connected to the user equipment via at least a control plane connection. The base station is connected to the user equipment via at least a user plane connection. The at least one memory 522 and the computer program code may also be configured, with the at least one processor 521, to also cause the apparatus 520 at least to inform the user equipment that the base station is switched to the control plane anchor. In addition, the at least one memory 522 and the computer program code may be configured, with the at least one processor 521, to cause the apparatus 520 at least to establish a new connection between the base station and the user equipment. The new connection establishes the base station as the control plane anchor

Processors 511 and 521 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 512 and 522 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network entity 520 or UE 510, to perform any of the processes described above (see, for example, Figures 1, 2, 3, and 4). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Furthermore, although Figure 5 illustrates a system including a network entity 520 and UE 510, certain embodiments may be applicable to other configurations, and configurations involving additional elements, as illustrated and discussed herein. For example, multiple user equipment devices and multiple network entities may be present, or other nodes providing similar functionality, such as nodes that combine the functionality of a user equipment and an network entity, such as a relay node. The UE 510 may likewise be provided with a variety of configurations for communication other than communication network entity 520. For example, the UE 510 may be configured for device-to-device or machine-to-machine communication.

The above embodiments provide for improvements to the functioning of a network and/or to the functioning of the nodes or computers within the network, or the user equipment communicating with the network. Specifically, certain embodiments allow for control plane redundancy and connectivity robustness that help to facilitate seamless transmission of control plane operations of a UE between two or more base stations. In some embodiments, a failed radio connection may be moved from one base station to another base station without service interruption. The above embodiments, therefore, allow ultra-reliable communications to be maintained throughout the network.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that the invention as discussed above may be practiced with hardware elements in configurations which are different than those which are disclosed. While some embodiments may be directed to a 5G environment, other embodiments can be directed to other 3GPP technology, such as LTE advanced, LTE, or Internet of Things technology.

### Partial Glossary

- 3GPP: 3rd Generation Partnership Project
- 5G: 5th generation
- MeNB: master evolved NodeB
- RATs: radio access technologies
- SeNB: secondary eNB
- HetNet: heterogeneous network
- WLAN: wireless local access network
- URLLC: ultra-reliable low latency communications
- RAN: radio access network
- UE: user equipment
- 5G BTS: 5G base station
- RNC: radio network controller
- WLC: WLAN controller
- mBTS: 5G macro
- sBTS: 5G small cells
- KPIs: key performance indicators
- GPRS: general packet radio service
- GTP TEID: GPRS tunneling protocol tunnel endpoint identifier

## Claims

1. A method performed by a base station, the method comprising:
receiving (110) communication information from another base station, wherein the another base station is a control plane anchor connected to a user equipment via at least a control plane connection, and wherein the base station is connected to the user equipment via at least a user plane connection;
after the receiving (110), detecting (120) a connection opportunity as a control plane anchor with the user equipment that is connected to the another base station, when the another base station is unavailable; and
in response to the detecting (120):
informing (130) the user equipment that the control plane anchor is switched from the another base station to the base station; and
establishing (140) a new connection between the base station and the user equipment using the communication information received from the another base station, wherein the new connection establishes the base station as the control plane anchor.

2. An apparatus of a base station, the apparatus comprising:
means for receiving (110) communication information from another base station, wherein the another base station is a control plane anchor connected to a user equipment via at least a control plane connection, and the base station is connected to the user equipment via at least a user plane connection;
means for, after receiving the communication information, detecting (120), at the base station, a connection opportunity as a control plane anchor with the user equipment that is connected to the another base station, when the another base station is unavailable;
means for informing (130) the user equipment that the control plane anchor is switched from the another base station to the base station; and
means for establishing (140) a new connection between the base station and the user equipment using the communication information received from the another base station, wherein the new connection establishes the base station as the control plane anchor.

3. The apparatus according to claim 2, wherein the communication information comprises an identifier used to communicate with at least one of: a core network, and the user equipment in the form of radio information,
wherein the radio information comprises information of at least one of: quality of service, assigned frequency channel, and encryption.

4. The apparatus according to claim 2 or claim 3, wherein the new connection indicates that the control plane anchor is switched from the another base station to the base station.

5. The apparatus according to any one of claims 2 to 4, further comprising:
means for sending a message from the base station to the another base station; and
wherein the means for detecting, at the base station, the connection opportunity is configured to detect the connection opportunity based on a failure to receive a response from the another base station.

6. The apparatus according to any one of claims 2 to 5, further comprising:
means for sending a notification from the base station to a core network, wherein the notification informs the core network of the new connection.

7. The apparatus according to any one of claims 2 to 6, further comprising:
means for sending from the base station to the user equipment a radio resource reconfiguration information, wherein the radio resource reconfiguration information informs the user equipment that the base station is the control plane anchor.

8. The apparatus according to any one of claims 2 to 7, wherein only the control plane anchor sends a handover commands to the user equipment.

9. The apparatus according to any one of claims 2 to 8, wherein the base station is a small cell base station or a wireless local access network access point; wherein the another base station is a macro base station; and wherein the base station comprises a radio access technology that is different than the radio access technology of the another base station.

10. A computer program product encoding instructions for causing an apparatus of a base station to perform, when said instructions are executed by the apparatus, a process comprising:
receiving (110) communication information from another base station, wherein the another base station is a control plane anchor connected to a user equipment via at least a control plane connection, and wherein the base station is connected to the user equipment via at least a user plane connection;
after the receiving (110), detecting (120) a connection opportunity as a control plane anchor with the user equipment that is connected to the another base station, when the another base station is unavailable; and
in response to the detecting (120):
informing (130) the user equipment that the control plane anchor is switched from the another base station to the base station; and
establishing (140) a new connection between the base station and the user equipment using the communication information received from the another base station, wherein the new connection establishes the base station as the control plane anchor.

## Patentansprüche

1. Verfahren, das von einer Basisstation durchgeführt wird, wobei das Verfahren Folgendes umfasst:
Empfangen (110) von Kommunikationsinformationen von einer anderen Basisstation, wobei die andere Basisstation ein Steuerebenenanker ist, der via mindestens eine Steuerebenenverbindung mit einer Teilnehmereinrichtung verbunden ist, und wobei die Basisstation via mindestens eine Benutzerebenenverbindung mit der Teilnehmereinrichtung verbunden ist;
nach dem Empfangen (110) Detektieren (120) einer Verbindungsgelegenheit als einen Steuerebenenanker mit der Teilnehmereinrichtung, die mit der anderen Basisstation verbunden ist, wenn die andere Basisstation nicht verfügbar ist; und
in Reaktion auf das Detektieren (120):
Informieren (130) der Teilnehmereinrichtung, dass der Steuerebenenanker von der anderen Basisstation zur Basisstation umgeschaltet wird; und
Einrichten (140) einer neuen Verbindung zwischen der Basisstation und der Teilnehmereinrichtung unter Verwendung der Kommunikationsinformationen, die von der anderen Basisstation empfangen werden, wobei die neue Verbindung die Basisstation als den Steuerebenenanker einrichtet.

2. Vorrichtung einer Basisstation, wobei die Vorrichtung Folgendes umfasst:
Mittel zum Empfangen (110) von Kommunikationsinformationen von einer anderen Basisstation, wobei die andere Basisstation ein Steuerebenenanker ist, der via mindestens eine Steuerebenenverbindung mit einer Teilnehmereinrichtung verbunden ist, und die Basisstation via mindestens eine Benutzerebenenverbindung mit der Teilnehmereinrichtung verbunden ist;
Mittel zum, nach Empfangen der Kommunikationsinformationen, Detektieren (120) einer Verbindungsgelegenheit an der Basisstation als einen Steuerebenenanker mit der Teilnehmereinrichtung, die mit der anderen Basisstation verbunden ist, wenn die andere Basisstation nicht verfügbar ist;
Mittel zum Informieren (130) der Teilnehmereinrichtung, dass der Steuerebenenanker von der anderen Basisstation zur Basisstation umgeschaltet wird; und
Mittel zum Einrichten (140) einer neuen Verbindung zwischen der Basisstation und der Teilnehmereinrichtung unter Verwendung der Kommunikationsinformationen, die von der anderen Basisstation empfangen werden, wobei die neue Verbindung die Basisstation als den Steuerebenenanker einrichtet.

3. Vorrichtung nach Anspruch 2, wobei die Kommunikationsinformationen eine Kennung umfassen, die zum Kommunizieren mit mindestens einem von Folgendem verwendet wird: einem Kernnetzwerk und der Teilnehmereinrichtung in Form von Funkinformationen,
wobei die Funkinformationen Informationen über mindestens eines von Folgendem umfassen: Dienstqualität, zugewiesener Frequenzkanal und Verschlüsselung.

4. Vorrichtung nach Anspruch 2 oder Anspruch 3, wobei die neue Verbindung anzeigt, dass der Steuerebenenanker von der anderen Basisstation zur Basisstation umgeschaltet wird.

5. Vorrichtung nach einem der Ansprüche 2 bis 4, die ferner Folgendes umfasst:
Mittel zum Senden einer Nachricht von der Basisstation an die andere Basisstation; und
wobei die Mittel zum Detektieren der Verbindungsgelegenheit an der Basisstation dazu ausgelegt sind, die Verbindungsgelegenheit in Reaktion auf das Nichtempfangen einer Antwort von der anderen Basisstation zu detektieren.

6. Vorrichtung nach einem der Ansprüche 2 bis 5, die ferner Folgendes umfasst:
Mittel zum Senden einer Benachrichtigung von der Basisstation an ein Kernnetzwerk, wobei die Benachrichtigung das Kernnetzwerk über die neue Verbindung informiert.

7. Vorrichtung nach einem der Ansprüche 2 bis 6, die ferner Folgendes umfasst:
Mittel zum Senden von Funkressourcenneuauslegungsinformationen von der Basisstation an die Teilnehmereinrichtung, wobei die Funkressourcenneuauslegungsinformationen die Teilnehmereinrichtung informieren, dass die Basisstation der Steuerebenenanker ist.

8. Vorrichtung nach einem der Ansprüche 2 bis 7, wobei nur der Steuerebenenanker einen Übergabebefehl an die Teilnehmereinrichtung sendet.

9. Vorrichtung nach einem der Ansprüche 2 bis 8, wobei die Basisstation eine Kleinzellenbasisstation oder ein Zugangspunkt für ein drahtloses lokales Zugangsnetzwerk ist; wobei die andere Basisstation eine Makrobasisstation ist; und wobei die Basisstation eine Funkzugangstechnologie umfasst, die sich von der Funkzugangstechnologie der anderen Basisstation unterscheidet.

10. Computerprogrammprodukt, in dem Anweisungen codiert sind, die eine Vorrichtung einer Basisstation veranlassen, wenn die Anweisungen von der Vorrichtung ausgeführt werden, einen Prozess durchzuführen, der Folgendes umfasst:
Empfangen (110) von Kommunikationsinformationen von einer anderen Basisstation, wobei die andere Basisstation ein Steuerebenenanker ist, der via mindestens eine Steuerebenenverbindung mit einer Teilnehmereinrichtung verbunden ist, und wobei die Basisstation via mindestens eine Benutzerebenenverbindung mit der Teilnehmereinrichtung verbunden ist;
nach dem Empfangen (110) Detektieren (120) einer Verbindungsgelegenheit als einen Steuerebenenanker mit der Teilnehmereinrichtung, die mit der anderen Basisstation verbunden ist, wenn die andere Basisstation nicht verfügbar ist; und
in Reaktion auf das Detektieren (120):
Informieren (130) der Teilnehmereinrichtung, dass der Steuerebenenanker von der anderen Basisstation zur Basisstation umgeschaltet wird; und
Einrichten (140) einer neuen Verbindung zwischen der Basisstation und der Teilnehmereinrichtung unter Verwendung der Kommunikationsinformationen, die von der anderen Basisstation empfangen werden, wobei die neue Verbindung die Basisstation als den Steuerebenenanker einrichtet.

## Revendications

1. Procédé effectué par une station de base, le procédé comprenant :
la réception (110) d'informations de communication d'une autre station de base, dans lequel l'autre station de base est un ancrage de plan de commande connecté à un équipement utilisateur via au moins une connexion de plan de commande, et dans lequel la station de base est connectée à l'équipement utilisateur via au moins une connexion de plan d'utilisateur ;
après la réception (110), la détection (120) d'une opportunité de connexion, en tant qu'ancrage de plan de commande, à l'équipement utilisateur qui est connecté à l'autre station de base lorsque l'autre station de base n'est pas disponible ; et
en réponse à la détection (120) :
l'information (130) de l'équipement utilisateur du fait que l'ancrage de plan de commande est passé de l'autre station de base à la station de base ; et
l'établissement (140) d'une nouvelle connexion entre la station de base et l'équipement utilisateur à l'aide des informations de communication reçues de l'autre station de base, dans lequel la nouvelle connexion établit la station de base en tant qu'ancrage de plan de commande.

2. Appareil d'une station de base, l'appareil comprenant :
un moyen pour recevoir (110) des informations de communication d'une autre station de base, dans lequel l'autre station de base est un ancrage de plan de commande connecté à un équipement utilisateur via au moins une connexion de plan de commande, et la station de base est connectée à l'équipement utilisateur via au moins une connexion de plan d'utilisateur ;
un moyen pour, après la réception des informations de communication, détecter (120) au niveau de la station de base une opportunité de connexion, en tant qu'ancrage de plan de commande, à l'équipement utilisateur qui est connecté à l'autre station de base lorsque l'autre station de base n'est pas disponible ;
un moyen pour informer (130) l'équipement utilisateur que l'ancrage de plan de commande est passé de l'autre station de base à la station de base ; et
un moyen pour établir (140) une nouvelle connexion entre la station de base et l'équipement utilisateur à l'aide des informations de communication reçues de l'autre station de base, dans lequel la nouvelle connexion établit la station de base en tant qu'ancrage de plan de commande.

3. Appareil selon la revendication 2, dans lequel les informations de communication comprennent un identifiant utilisé pour communiquer avec au moins l'un des éléments suivants : un réseau central, et l'équipement utilisateur sous la forme d'informations radio,
dans lequel les informations radio comprennent des informations d'au moins l'un des éléments suivants : une qualité de service, un canal de fréquence attribué et un cryptage.

4. Appareil selon la revendication 2 ou la revendication 3, dans lequel la nouvelle connexion indique que l'ancrage de plan de commande est passé de l'autre station de base à la station de base.

5. Appareil selon l'une quelconque des revendications 2 à 4, comprenant en outre :
un moyen pour envoyer un message de la station de base à l'autre station de base ; et
dans lequel le moyen pour détecter, au niveau de la station de base, l'opportunité de connexion, est configuré pour détecter l'opportunité de connexion en cas d'échec de réception d'une réponse de l'autre station de base.

6. Appareil selon l'une quelconque des revendications 2 à 5, comprenant en outre :
un moyen pour envoyer une notification de la station de base à un réseau central, dans lequel la notification informe le réseau central de la nouvelle connexion.

7. Appareil selon l'une quelconque des revendications 2 à 6, comprenant en outre :
un moyen pour envoyer de la station de base à l'équipement utilisateur des informations de reconfiguration des ressources radio, dans lequel les informations de reconfiguration des ressources radio informent l'équipement utilisateur que la station de base est l'ancrage de plan de commande.

8. Appareil selon l'une quelconque des revendications 2 à 7, dans lequel seul l'ancrage de plan de commande envoie un ordre de transfert à l'équipement utilisateur.

9. Appareil selon l'une quelconque des revendications 2 à 8, dans lequel la station de base est une station de base à petite cellule ou un point d'accès à un réseau d'accès local sans fil ; dans lequel l'autre station de base est une station de base macro ; et dans lequel la station de base comprend une technologie d'accès radio qui est différente de la technologie d'accès radio de l'autre station de base.

10. Produit programme informatique codant des instructions pour amener un appareil d'une station de base à effectuer, lorsque lesdites instructions sont exécutées par l'appareil, un processus comprenant :
la réception (110) d'informations de communication d'une autre station de base, dans lequel l'autre station de base est un ancrage de plan de commande connecté à un équipement utilisateur via au moins une connexion de plan de commande, et dans lequel la station de base est connectée à l'équipement utilisateur via au moins une connexion de plan d'utilisateur ;
après la réception (110), la détection (120) d'une opportunité de connexion, en tant qu'ancrage de plan de commande, à l'équipement utilisateur qui est connecté à l'autre station de base lorsque l'autre station de base n'est pas disponible ; et
en réponse à la détection (120) :
l'information (130) de l'équipement utilisateur du fait que l'ancrage de plan de commande est passé de l'autre station de base à la station de base ; et
l'établissement (140) d'une nouvelle connexion entre la station de base et l'équipement utilisateur à l'aide des informations de communication reçues de l'autre station de base, dans lequel la nouvelle connexion établit la station de base en tant qu'ancrage de plan de commande.
